# FASCICULE DE BREVET EUROPEEN

(11) **EP 0 437 639 B1**
(45) Date de publication et mention de la délivrance du brevet: **10.11.1993**
(21) Numéro de dépôt: 89403477.6
(22) Date de dépôt: 14.12.1989
(51) Int. Cl.: F16G 3/02

(54) **Joint d'étanchéité de la jonction de deux tronçons d'un tapis transporteur et dispositif de jonction comportant un tel joint**
Dichtung für die Verbindung von zwei Stücken eines Förderbandes und eine solche Dichtung aufweisende Verbindung
Seal for the connection of two parts of a conveyor belt and connection comprising such a seal

(43) Date de publication de la demande: 24.07.1991
(73) Titulaire: GORO S.A., F-77500 Chelles (FR)
(72) Inventeur: Schick, Jean-Francois, F-75016 Paris (FR)
(74) Mandataire: Boutin, Antoine

(56) Documents cités:
- DE-C- 826 723
- FR-A- 2 372 353
- FR-A- 2 593 872
- GB-A- 634 028
- GB-A- 2 169 053

## Description

La présente invention est relative aux dispositifs utilisés pour la jonction de deux tronçons d'un tapis transporteur. Elle concerne plus spécialement les dispositifs de jonction constitués par deux rangées d'agrafes de section générale en forme de U, qui sont destinées à être fixées à cheval sur les extrémités de ces deux tronçons pour être ensuite réunies par un axe d'articulation enfilé dans les charnons imbriqués formés par ces agrafes. Le document FR-A-2 593 872 décrit un tel dispositif selon le préambule de la revendication 1 et 3.

Du fait même de cette structure, il existe un jeu plus ou moins important entre les charnons des deux rangées d'agrafes ainsi qu'entre les charnons d'une rangée déterminée et le bord de l'extrémité opposée du tapis transporteur. Dans ces conditions, lorsqu'un tel tapis est utilisé pour le transport de matériaux en vrac comportant des fines, par exemple du charbon, ces fines peuvent passer à travers les interstices existant ainsi à l'endroit d'un tel dispositif de jonction. Or, le passage de ces fines constitue un inconvénient car ces dernières peuvent s'introduire dans les paliers et roulements des galets de guidage et des tambours d'entraînement du tapis transporteur. Il peut en résulter des risques de grippage et de détérioration de l'installation correspondantes.

Pour éviter ces inconvénients, il a déjà été proposé l'ajonction de moyens destinés à assurer, autant que possible, l'étanchéïté des dispositifs de jonction du type en cause. Ainsi, le brevet britannique GB-A-634.028 décrit un dispositif de jonction dans lequel il est prévu l'adjonction d'un bourrelet en matière compressible entre le bord de chaque extrémité d'un tapis transporteur et l'axe d'articulation engagé dans les charnons des deux rangées d'agrafes. En raison de leur compressibilité, ces bourrelets viennent alors épouser la forme des parties en regard de l'axe d'articulation. Cependant, du fait même qu'ils sont simplement enfilés dans l'intervalle existant entre l'axe de jonction et le bord de l'une des extrémités du tapis transporteur, ces bourrelets ne sont pas réellement immobilisés en place. Ils peuvent donc se déplacer. De plus, cette absence d'immobilisation a pour effet que ces bourrelets peuvent être tordus sur eux-mêmes lors de l'articulation du dispositif correspondant de jonction, ce qui entraîne une détérioration rapide de ceux-ci.

Par ailleurs, un tel bourrelet doit avoir une épaisseur déterminée en fonction de celle du tapis transporteur correspondant. Il n'est donc pas possible d'utiliser un même type de bourrelet pour des tapis d'épaisseurs très différentes.

C'est pourquoi la présente invention a pour objet un joint d'étanchéïté conçu de façon à éviter les inconvénients exposés ci-dessus, la conception de ce joint étant également telle que le montage de celui-ci puisse être réalisé très facilement.

A cet effet ce joint est constitué par un profilé en matière élastique de section en forme générale de U pouvant être placé à cheval sur l'extrémité d'un tronçon à assembler, et ce sous les agrafes de la rangée correspondante d'un dispositif de jonction. Or ce joint est caractérisé en ce que :
- la branche médiane de celui-ci présente une série de découpes transversales aptes à recevoir l'extrémité du charnon de l'une des agrafes de jonction de la rangée antagoniste, ces découpes délimitant autant de lamelles étroites destinées à s'appliquer contre l'axe de jonction, du côté diamétralement opposé à celui de l'extrémité du charnon de l'une des agrafes de la rangée correspondante,
- chacune des lamelles étroites ainsi prévues forme une bouche faisant saillie du côté opposé à celui destiné à s'appliquer sur l'axe de jonction, cette boucle pouvant être plus ou moins compressée ou étirée suivant l'épaisseur du tapis transporteur correspondant.

Ainsi, le présent joint est parfaitement immobilisé après fixation en place des agrafes du dispositif de jonction correspondant, car les crampons de fixation de ces agrafes sont amenés à traverser l'une et l'autre branches latérales de ce joint. Par ailleurs celui-ci peut être utilisé sur des tapis transporteurs d'épaisseur plus ou moins importantes. En effet la boucle prévue sur les lamelles formant la branche médiane de ce joint permet à celles-ci de s'étendre plus ou moins ou de se rétracter sur elles-mêmes, suivant que le tapis transporteur est très épais ou au contraire peu épais. Du reste, la présence des découpes prévues entre ces lamelles confère une très grande souplesse à la branche médiane du joint et permet justement à celle-ci de pouvoir être étendue ou rétractée, et ce en fonction de l'épaisseur plus ou moins grande du tapis transporteur correspondant.

La présente invention a également pour objet les dispositifs de jonction du type rappelé précédemment qui sont pourvus de deux joints d'étanchéïté tels que définis ci-dessus.

Du reste l'invention apparaitra au cours de la description suivante. Celle-ci est donnée en référence aux dessins annéxés à simple titre indicatif, et sur lesquels :
La figure 1 est une vue en perspective d'un joint d'étanchéïté selon l'invention.
La figure 2 est une vue partielle en élévation de la face interne d'un tel joint.
La figure 3 est une vue partielle en perspective d'une jonction de tapis transporteur réalisée au moyen d'un dispositif de jonction comportant deux joints d'étanchéïté selon l'invention.
Les figures 4a et 4b sont des vues en coupe, respectivement suivant les lignes A-A et B-B de la figure 3.

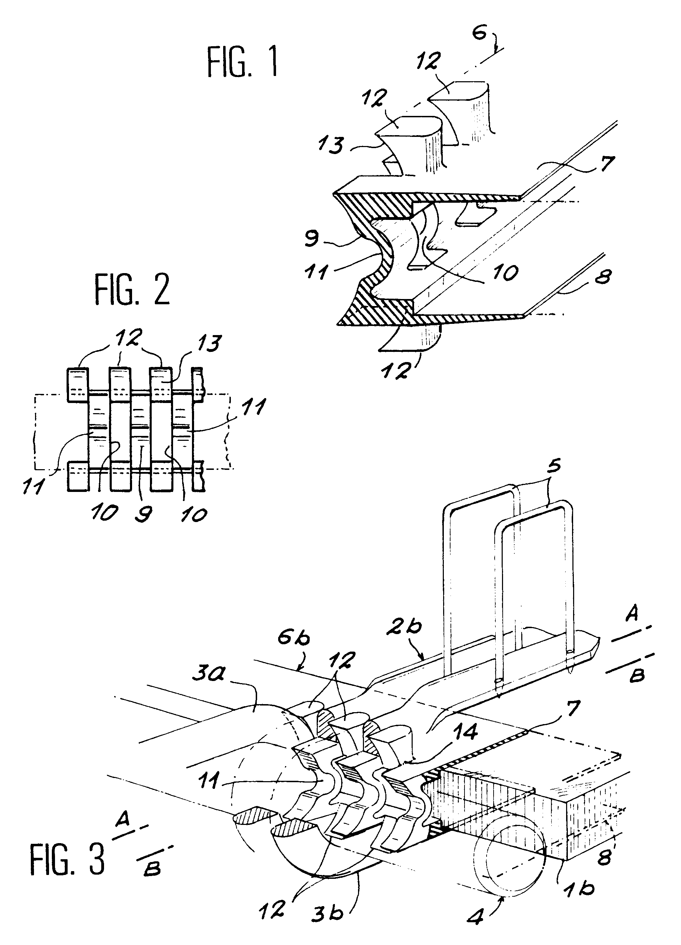

Comme déjà indiqué, le joint d'étanchéïté représenté à la figure 1 est destiné à être adjoint à un dispositif de jonction des extrémités de deux tronçons 1a et 1b d'un tapis transporteur. Ce dispositif est du type comprenant deux rangées d'agrafes métalliques 2a, 2b de forme générale en U qui sont disposées à cheval sur les extrémités de l'un et l'autre de ces deux tronçons. Ces agrafes forment des charnons, respectivement 3a et 3b, qui sont donc orientés en sens inverse. Ces charnons sont décalés pour être imbriqués les uns avec les autres de façon à constituer une sorte de charnière à l'intérieur de laquelle est engagé un axe 4 de jonction constitué par un tronçon de câble métallique. La fixation des agrafes des deux rangées est assurées par des crampons métalliques 5 dont les pointes sont rabattues après avoir traversé successivement une première branche de l'une des agrafes 2a ou 2b, le tronçon correspondant 1a ou 1b du tapis transporteur, et la branche opposée de la même agrafe.

Le joint d'étanchéïté représenté à la figure 1, et qui est désigné par la référence générale 6, présente une section en forme générale de U. Ainsi ce joint peut être placé à cheval sur l'extrémité de l'un des tronçons du tapis transporteur, au dessous des agrafes de la rangée correspondante. Les deux branches latérales 7 et 8 forment alors deux bandes qui se trouvent placées contre l'une et l'autre faces du tronçon correspondant du tapis transporteur. Ainsi lors de l'enfoncement des crampons 5 de fixation, ces deux branches sont traversées par ces crampons.

La branche médiane 9 de ce joint présente une série de découpes transversales 10 délimitant autant de lamelles étroites 11. Or chacune de ces lamelles forme une boucle faisant saillie vers le côté opposé à celui prévu pour l'axe de jonction 4.

Près de leur jonction avec la branche médiane 9 du joint, chacune des branches latérales 7 et 8 de celui-ci porte une série de dents saillantes 12. Chacune de celles-ci se trouve disposée très exactement à l'aplomb de l'une des découpes 10 de la branche médiane 9. Il convient de noter que la face des dents 12, qui est tournée en direction de l'axe de jonction 4, présente un profil 13 de forme concave.

Le joint ainsi constitué est fabriqué par moulage en matière élastique, par exemple en caoutchouc naturel ou synthétique. Ainsi ce joint présente une très grande souplesse. Cette souplesse est évidemment accentuée à l'endroit de la branche médiane 9 du fait de la présence des très nombreuses découpes transversales 10. En conséquence les lamelles intermédiaires 11 possédent une très grande souplesse et peuvent ainsi se déformer très facilement.

Les dents saillantes 12 de ce joint sont destinées à être placées à l'intérieur des intervalles 14 existant entre deux charnons successifs 3a ou 3b de la rangée correspondante d'agrafes. Les découpes 10 du joint considéré se trouvent donc elles-mêmes placées entre deux charnons successifs de cette rangée d'agrafes. Ainsi, lors de l'assemblage des deux rangées d'agrafes au moyen de l'axe de jonction 4, les découpes 10 et les lamelles 11 des deux joints 6a et 6b équipant l'une et l'autre de ces deux rangées, sont elles-mêmes décalées comme les charnons 3a et 3b de ces agrafes. En conséquence, ce sont les extrémités des charnons de la rangée antagoniste d'agrafes qui se trouvent placées à l'intérieur des découpes 10 d'un joint considéré 6a ou 6b, et qui viennent en contact avec la face courbe 13 des dents saillantes 12 de ce joint.

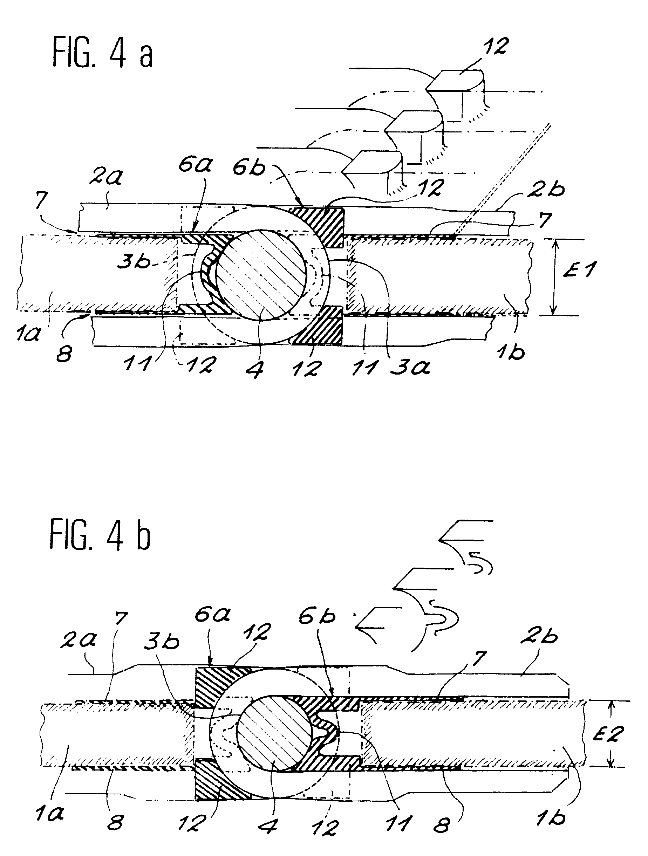

Quant aux lamelles 11 de ce même joint, elles sont situées en regard des charnons 3a ou 3b de la rangée correspondante d'agrafes. En conséquence, ces lamelles s'appliquent directement contre l'axe de jonction 4, du côté diamétralement opposé à celui de l'extrémité du charnon de l'une des agrafes de la rangée correspondante. Ainsi, comme cela apparait clairement sur les figures 4a et 4b, l'axe 4 se trouve complétement enveloppé entre le charnon 3a ou 3b des agrafes de l'une des rangées et l'une des lamelles 11 du joint appartenant à la même rangée d'agrafes (voir figures 4a et 4b). Ceci permet d'obtenir une étanchéïté parfaite, et ce d'autant plus que les dents saillantes 11 sont engagées dans les intervalles entre deux charnons successifs et que par ailleurs les extrémités des charnons 3a ou 3b de chaque rangée sont engagées dans les découpes 10 de la branche médiane 9 du joint appartenant à la rangée antagoniste d'agrafes.

Cependant le principal avantage du joint selon l'invention réside dans le fait que celui-ci peut être utilisé sur des tronçons de tapis transporteur d'épaisseur plus ou moins importante. Ceci résulte du fait que la forme en boucle, prévue pour les lamelles 11, permet à ces dernières d'être plus ou moins étendues suivant le cas ou au contraire rétractées sur elles-mêmes. Or comme il a déjà été indiqué, ces lamelles présentent une très grande souplesse du fait de la présence des nombreuses découpes 10 existant dans la branche médiane 9 du joint.

Du reste les figures 4a et 4b illustrent l'utilisation du joint selon l'invention sur des tapis transporteurs ayant des épaisseurs différentes E1 et E2. Comme on peut le constater, lorsque de tels joints sont utilisés sur des tapis transporteurs d'épaisseur relativement importante, ceci provoque simplement un allongement de la boucle formée par les lamelles 11 (cas de la figure 4a). Par contre lorsque de tels joints sont employés avec des tapis transporteurs d'épaisseur plus faible, ceci se traduit par une compression plus ou moins accentuée, "en accordéon", de la boucle formée par les lamelles 11 (cas de la figure 4b). Ainsi il existe une très grande latitude, de sorte qu'un même type de joint peut être utilisé sur des tapis ayant des épaisseurs très différentes. Il s'agit donc là d'un avantage essentiel par rapport aux joints d'étanchéïté prévus jusqu'ici sur des dispositifs de jonction du type en cause.

Du fait même de la conception du présent joint, celui-ci peut être monté à l'avance à l'intérieur des agrafes d'une même rangée. Les dents saillantes 12 de ce joint sont alors engagées entre les intervalles existant entre les charnons de la rangée considérée d'agrafes. Ceci suffit pour assurer le maintien en place des joints d'étanchéïté jusqu'au moment où la rangée correspondante d'agrafes sera utilisée et fixée en place, la section des dents saillantes 12 étant dimensionnée pour assurer un certain coincement en place.

En conséquence il n'y a pas d'opérations supplémentaires à réaliser pour la mise en place des joints d'étanchéïté équipant les deux rangées d'agrafes d'un même dispositif de jonction. En effet il suffit d'adapter les deux rangées d'agrafes sur les extrémités de l'un et l'autre des deux tronçons de tapis à assembler pour que les deux joints d'étanchéïté correspondants se trouvent eux-mêmes convenablement montés avec le positionnement voulu pour que les extrémités des charnons des agrafes de l'une des rangées viennent s'engager dans les découpes 10 de la branche médiane du joint 6 prévu à l'intérieur des agrafes de la rangée antagoniste.

Dans l'exemple représenté, le joint d'étanchéïté selon l'invention est utilisé avec des agrafes dont chacune comporte deux charnons. Cependant ce joint pourrait tout aussi bien être utilisé avec des agrafes pourvues chacune d'un seul charnon, ou au contraire d'un plus grand nombre de charnons. Du reste les détails de forme du joint d'étanchéïté selon l'invention peuvent être modifiés en fonction des caractéristiques des agrafes du dispositif de jonction.

Ainsi qu'il a déjà été indiqué, l'invention a également pour objet les dispositifs de jonction comportant deux rangées d'agrafes du type en cause et deux joints d'étanchéïté adjoints à l'une et l'autre de ces deux rangées. Ces dispositifs peuvent être utilisés pour la jonction des tronçons d'un tapis servant au transport de matériaux en vrac, par exemple du charbon, du gravier, etc.

## Revendications

1. Joint pour l'étanchéïté (6, 6a, 6b) de la jonction de deux tronçons (1a, 1b) d'un tapis transporteur au moyen de deux rangées d'agrafes (2a, 2b) métalliques, de forme générale en U, placées à cheval sur les extrémités des deux tronçons à assembler, et qui sont elles-mêmes réunies par un axe de jonction (4) enfilé dans les charnons (3a, 3b) imbriqués formés par ces agrafes, ce joint étant constitué par un profilé en matière élastique de section en forme générale de U de façon à pouvoir être également placé à cheval sur l'extrémité d'un tronçon à assembler, et ce sous les agrafes de la rangée correspondante, caractérisé en ce que :
- la branche médiane (9) de ce joint (6) présente une série de découpes transversales (10) aptes à recevoir l'extrémité du charnon (3a, 3b) de l'une des agrafes de jonction (2a, 2b) de la rangée antagoniste, ces découpes délimitant autant de lamelles étroites (11) destinées à s'appliquer contre l'axe de jonction (4), du côté diamétralement opposé à celui de l'extrémité du charnon (3a, 3b) de l'une des agrafes de la rangée correspondante,
- chacune des lamelles étroites (11) ainsi prévues forme une bouche faisant saillie du côté opposé à celui destiné à s'appliquer sur l'axe de jonction (4), cette boucle pouvant être plus ou moins compressée ou étirée suivant l'épaisseur du tapis transporteur correspondant.

2. Joint selon la revendication 1, caractérisé en ce que, près de leur jonction avec la branche médiane (9), chacune des branches latérales (7, 8) porte une série de dents saillantes (12), situées chacune à l'aplomb d'une découpe transversale (10) de cette branche médiane, ces dents saillantes étant destinées à être disposées dans les intervalles existant entre deux charnons successifs (3a, 3b) de la rangée correspondante d'agrafes.

3. Dispositif de jonction de deux tronçons (1a, 1b) d'un tapis transporteur au moyen de deux rangées d'agrafes (2a, 2b) métalliques des deux tronçons à assembler, et qui sont elles-mêmes réunies par un axe de jonction (4) enfilé dans les charnons (3a, 3b) imbriqués formés par ces agrafes, caractérisé en ce que ce dispositif comprend en outre deux joints (6, 6a, 6b) d'étanchéïté selon l'une des revendications précédentes.

## Claims

1. A fluid-tight seal (6, 6a, 6b) for the joining of two stretches (1a, 1b) of a conveyor belt by means of two rows of metal staples (2a, 2b) having a general U-shape, place astride over the ends of the two stretches to be assembled, said rows of staples being joined together by a hinge pin (4) inserted through the interlocking knuckles (3a, 3b) formed by said staples, said seal being constituted by a profile of plastic material having a general U-shape such that it may also be placed astride over the end of a stretch to be assembled, under the staples of the corresponding row, **characterized** in that :
- the median leg (9) of the seal (6) presents a series of transversal cuts (10) capable of receiving the end of the knuckle (3a, 3b) of one of the junction staples (2a, 2b) of the opposite row, said cuts defining so many narrow strips (11) intended for fitting against the hinge pin (4) on the side diametrally opposite the side of the knuckle end (3a, 3b) of one of the staples of the corresponding row,
- each one of said narrow strips (11) forms a salient loop on its side opposite the side intended for fitting over the hinge pin (4), while said loop may be more or less compressed or stretched according to the thickness of the corresponding conveyor belt.

2. A seal according to Claim 1, characterized in that each one of the lateral legs (7, 8) thereof carries, near its junction with the median leg (9), a series of salient teeth (12), each tooth being in registry with a transversal cut (10) of said median leg, said teeth being intended for being disposed in the intervals formed between two consecutive knuckles (3a, 3b) of the corresponding row of staples.

3. A device for joining two stretches (1a, 1b) of a conveyor belt by means of two rows of metal staples (2, 2b) placed on the two stretches to be assembled, said rows of staples being joined together by a hinge pin (4) inserted through the interlocking knuckles (3a, 3b) formed by said staples,
**characterized** in that this device further comprises two fluid-tight seals (6, 6a, 6b) according to one of the preceding Claims.

## Patentansprüche

1. Dichtung (6, 6a, 6b) zur Abdichtung der Verbindungsstelle von zwei Teilstücken (1a, 1b) eines Transportbandes mittels zweier Reihen von Metallklammern (2a, 2b), im allgemeinen in U-Form, die auf den Enden der zwei zu verbindenden Teilstücke übergreifend aufgesetzt sind und die ihrerseits durch einen Verbindungsbolzen (4) zusammengefügt sind, der in die durch diese Klammern gebildeten sich überlappenden Scharnieraugen (3a, 3b) eingeführt ist, wobei diese Dichtung aus einem Profil aus einem elastischen Material mit einem im allgemeinen U-förmigen Querschnitt besteht, so daß sie auch übergreifend auf das Ende eines zu verbindenden Teilstücks aufgesteckt werden kann und dies unter den Klammern der entsprechenden Reihe, **dadurch gekennzeichnet**, **daß**:
- der mittlere Teil (9) dieser Dichtung (6) eine Reihe von quergerichteten Ausstanzungen (10) aufweist, die geeignet sind, das Ende des Scharnierauges (3a, 3b) einer der Verbindungsklammern (2a, 2b) der gegenwirkenden Reihe aufzunehmen, wobei diese Ausstanzungen ebensoviele schmale Lamellen (11) abgrenzen, die dazu bestimmt sind, sich gegen den Verbindungsbolzen (4) an der genau entgegengesetzten Seite des Endes des Scharnierauges (3a, 3b) der einen der Klammern der entsprechenden Reihe zu drücken,
- jede der so vorgesehenen schmalen Lamellen (11) eine Schleife formt, die an der entgegengesetzten Seite zu der, die dazu bestimmt ist, gegen den Verbindungsbolzen (4) zu drücken, einen Vorsprung bildet, wobei diese Schleife mehr oder weniger zusammengedrückt oder auseinandergezogen sein kann, je nach der Stärke des entsprechenden Transportbandes.

2. Dichtung nach Anspruch 1, **dadurch gekennzeichnet, daß** nahe ihrer Verbindung mit dem mittleren Teil (9) jeder der seitlichen Teile (7, 8) eine Reihe von hervorspringenden Zähne (12) trägt, die jede senkrecht zu einer quergerichteten Ausstanzung (10) des mittleren Teils gelegen ist, wobei diese hervorspringenden Zähne dazu bestimmt sind, in die zwischen zwei aufeinanderfolgenden Scharnieraugen (3a, 3b) der entsprechenden Reihe von Klammern bestehenden Zwischenräume angeordnet zu werden.

3. Vorrichtung zur Verbindung von zwei Teilstücken (1a, 1b) eines Transportbandes mittels zweier Reihen von Metallklammern (2a, 2b) der zwei zu verbindenden Teilstücke und die ihrerseits durch einen Verbindungsbolzen (4) zusammengefügt sind, der in die durch diese Klammern gebildeten überlappenden Scharnieraugen (3a, 3b) eingeführt ist, **dadurch gekennzeichnet, daß** diese Vorrichtung außerdem zwei Dichtungen (6, 6a, 6b) nach einem der vorangehenden Ansprüche aufweist.
